# EUROPEAN PATENT SPECIFICATION

(11) **EP 0 404 208 B1**
(45) Date of publication and mention of the grant of the patent: **06.09.1995**
(21) Application number: 90115243.9
(22) Date of filing: 13.12.1985
(51) Int. Cl.: C25B 11/06

(54) **Method for preparing an electrode and use thereof in electrochemical processes**
Verfahren zur Herstellung einer Elektrode und deren Verwendung in elektrochemischen Verfahren
Procédé de fabrication d'une électrode et son utilisation dans les procédés électrochimiques

(30) Priority: 14.12.1984 IT 2406784; 17.10.1985 IT 2252985
(43) Date of publication of application: 27.12.1990
(62) Divisional of application: 86900127.1
(73) Proprietor: DE NORA PERMELEC S.P.A., 20134 Milano (IT)
(72) Inventor: Nidola, Antonio, I-Milano (IT)
(74) Representative: Kinzebach, Werner, Dr.

(56) References cited:
- DE-A- 3 132 269
- US-A- 4 105 531
- US-A- 4 414 064
- PATENT ABSTRACTS OF JAPAN, vol. 8, no. 114 (C-225)[1551], 26th May 1984; & JP-A-59 25 987

## Description

The present invention relates to a method for preparing electrodes for use in electrochemical process, in particular for use in ion exchange membrane or permeable diaphragm cells for the electrolysis of alkali metal halides and more particularly as cathodes for hydrogen evolution in the presence of alkali metal hydroxide solutions.

Further, the present invention relates to the electrodes which are obtainable by the above method.

The main requisites for industrial cathodes are a low hydrogen overvoltage, which results in a reduction of energy consumption, as well as a suitable mechanical stability under the stresses which may occur during assembly or due to the turbulence of the liquids during operation.

Cathodes which fulfil the above requirements are constituted by a support of a suitable conductive material, such as iron, steel, stainless steel, nickel and alloys thereof, copper and alloys thereof, whereto an electrocatalytic conductive coating is applied.

Said electrocatalytic conductive coating may be applied, among various methods, by galvanic or electroless deposition of metal or metal alloys, which are electroconductive, but only partially electrocatalytic per se, such as nickel or alloys thereof, copper or alloys thereof, silver or alloys thereof, containing metals of the platinum group exhibiting low hydrogen overvoltages, these metals being present in the coating as a homogeneous phase, most probably as a solid solution.

As an alternative, the electrocatalytic coating may be obtained by galvanic or electroless deposition of an electrically conductive metal, only partially electrocatalytic per se, such as nickel, copper, silver and alloys thereof as aforementioned, which contains dispersed therein particles of an electrocatalytic material exhibiting a low overvoltage to hydrogen evolution. The electrocatalytic particles may consist of elements belonging to the group comprising : titanium, zirconium, niobium, hafnium, tantalum, metals of the platinum group, nickel, cobalt, tin, manganese, as metals or alloys thereof, oxides thereof, mixed oxides, borides, nitrides, carbides, sulphides, and are added and held in suspension in the plating baths utilized for the deposition.

Examples of electrodes having a coating containing dispersed electrocatalytic particles are illustrated in Belgian Patent No. 848,458, corresponding to Italian patent application No. 29506 A/76, and in U.S. Patent No. 4,465,580 which are incorporated herein by reference.

A particularly serious drawback connected to the use of the aforementioned electrodes, when used as cathodes in diaphragm or ion exchange membrane cells for alkali halides electrolysis, is constituted by the progressive poisoning of the catalytic surface caused by metal ions contained in the electrolyte, with the consequent gradual increase of the hydrogen overvoltage. The process efficiency results therefore negatively affected, which represents a particularly critical problem involving the necessity of periodical substitution of the cathodes.

Metal impurities which are normally responsible for the poisoning comprise Fe, Co, Ni, Pb, Hg, Sn, Sb or the like.

In the specific case of brine electrolysis in membrane cells, the metal impurities are more frequently represented by iron and mercury.

Iron impurities may have two origins :
- a chemical one, from the anolyte, when the raw salt contains potassium ferrocyanide, added as anti-caking agent.
- an electrochemical one, due to corrosion of the steel structures of the cathodic compartment and accessories thereof.

Mercury is found in the brine circuit after conversion of mercury cells to membrane cells.

As soon as these impurities, which are usually present in solution under a complex form, diffuse to the cathode surface, they are readily electroprecipitated to the metal state, so that a poorly electrocatalytic layer is built up in a relatively short time.

This catalytic aging, which depends on various factors such as the type of cathodic material (composition and structure), working conditions (temperature, catholyte concentration) and the nature of the impurity, results remarkable and irreversible soon after a short time of operation even in the presence of impurities concentrations of some parts per million.

US-A-4,414,064 discloses a cathode for the generation of hydrogen which has, on a substrate, a coating from a codeposit of a first metal selected from iron, cobalt, nickel and mixtures thereof, a leachable second metal or metaloxide selected from molybdenum, manganese, titanium, tungsten, vanadium, indium, chromium, zinc, their oxides and combinations thereof and a third metal selected from cadmium, mercury, lead, silver, thallium, bismuth, copper and mixtures thereof. The coating is produced by codepositing a mixture of the three metals or metaloxides on the substrate surface. At least a portion of the second metal or metaloxide is subsequently removed by leaching using an alkaline solution. The cathodes have a low hydrogen overvoltage.

US-A-4,105,531 discloses a cathode having a copper substrate which is plated with an alloy of nickel, molybdenum and vanadium. The cathode is prepared by electro-depositing the alloy from a Watt's bath with the addition of small amounts of vanadium and molybdenum. The cathode has a low hydrogen overvoltage.

JP-A-59-25987 discloses a cathode with low overvoltage which has, on a substrate, a coating of electroplated silver or platinum group metal, an alloy thereof or a dioxide thereof containing electroconductive particles of raney nickel, raney cobalt and raney silver.

DE-A-31 32 269 discloses a cathode for the generation of hydrogen which comprises an electroconductive substrate and an electrocatalytic coating which contains fine carbonaceous particles. The cathode is prepared by galvanically depositing the electrocatalytic coating on the substrate from a galvanic nickle plating bath containing said carbonaceous particles. In addition, the plating bath may contain 5000 ppm or less of one or more metals, preferably in the form of a salt, selected from copper, chromium, aluminum, tin, zinc, barium, silver, platinum, rhodium, iridium and palladium. Due to the carbonacious particles, these cathodes exhibit a low hydrogen overvoltage.

In consideration of the above mentioned substantial practical drawbacks, the inventor carefully studied the behaviour of many cathodes having electrocatalytic coatings with different compositions and surprisingly found that by adding certain compounds to the galvanic deposition baths, mentioned above and described in the technical and patent literature, electrodes are obtained which exhibit low hydrogen overvoltages which remain stable, or nearly stable, for extended periods of time also in the presence of impurities contained in the electrolysis solutions. In particular, it has been found that the electrocatalytic coating of the electrodes of the present invention renders them practically immune to poisoning by iron and mercury, by introducing certain additives in the galvanic bath utilized for preparing these coatings in a concentration range of 100 to 2,000 ppm. In the following description and in the examples, coatings obtained as described above will be identified as doped coatings; the elements, which promote the resistance of the coatings to poisoning, will be referred to as doping elements.

The present invention relates to a method for galvanically preparing an electrode for electrochemical processes, said electrode being of the type consisting of
a) an electroconductive support and
b) an electrocatalytic coating of nickel, copper, silver or alloys thereof containing metals of the platinum group as a homogeneous phase and at least one doping element selected from cadmium, thallium, lead, tin, arsenic, antimony, bismuth, vanadium or molybdenum; said method consisting in applying said electrocatalytic coating by galvanic deposition on said electroconductive support from a galvanic nickel, copper or silver plating bath containing soluble salts of metals of the platinum group dissolved therein,
characterized in that
the galvanic plating bath further contains, in dissolved or suspended form, 100 to 2000 ppm of at least one compound of said doping elements.

Preferred doping elements are, cadmium, thallium, lead, tin , arsenic, vanadium or molybdenum.

The compounds of the above-mentioned elements for example may be oxides, sulfides, sulfates, thiosulfates, halides (especially chlorides), oxyhalides (especially oxychlorides), metal (especially alcali metal) salts of oxo acids, nitrates, mixed salts and complex salts.

For example, said compound may be selected from the group consisting of TlCl, Pb(NO₃)₂, SnCl₂, As₂O₃, Sb₂O₃, Bi₂O₃, CdCl₂, VOCl₂, Na₂MoO₄, MoO₃, Cd(NO₃)₂, Bi(NO₃)₃.

Deposition of the electrocatalytic coating onto the support is carried out according to conventional techniques well-known to a person skilled in galvanotechnics. For example, the galvanic nickelplating bath may be a Watt bath (nickel chloride and sulphate in the presence of boric acid or other buffering agent), a stabilized or un-stabilized sulphamate bath, a Weisberg bath, a nickel chloride bath, a nickel chloride and acetate bath and the like : according to the teachings of the aforementioned patents suitable quantities of soluble salts of platinum group metals are dissolved in the solution, As a typical example, the metal support is constituted by an expanded nickel sheet or fabric and the soluble salt of a platinum group metal is ruthenium trichloride.

Obviously, in case the coating is based on copper, silver or alloys thereof instead of nickel, galvanic or electroless baths based on said metals will be utilized.

The thickness of the electrocatalytic coating, the percentage of the platinum group metal present as a homogeneous phase in the coating are not critical per se, but are substantially defined on practical and economical basis : usually the coating thickness is comprised between 1 and 50 µm and the platinum group metal present as a homogeneous phase ranges from 0.1 to 50% by weight.

The present invention, with respect to the above mentioned process and to the teachings of the previously illustrated patent literature (Belgian Patent No. 848,458, U.S. Patent No. 4,465,580) is represented by the addition of suitable quantities of compounds of at least one of the aforementioned doping elements to the galvanic deposition bath, described above. By this addition the coating is found to contain varying quantities of doping elements: as illustrated in some of the following Examples, the concentration of doping elements may vary within ample limits depending on the conditions of deposition, particularly the current density, temperature, bath pH. at the same concentration of compounds of the doping elements in the deposition bath. However, the resistance to poisoning of the electrodes thus prepared, when operating as cathodes, appears to be completely independent from the variation of the concentration of the doping elements in the coating.

As regards the hindering action against poisoning and the chemical nature itself of the doping elements added to the coating (elemental state vs. oxidation state different from zero in finely divided dispersions of said compounds), a complete explanation is still difficult to state. It may be assumed that less noble doping elements, such as Zn, Cd, V, are present as hydrated oxides or as basic salts, causing a sharp modification of the wettability and adhesion characteristics between the coating surface and the mercury droplets and iron microcrystals which are formed during operation of the electrode as cathode in polluted alkali solutions. In fact, due to the presence, from the beginning, of metals of the platinum group in the growing coating, the deposition potential is not sufficiently cathodic to allow for the discharge of the doping element to the metal state.

Therefore, the coatings according to the present invention are substantially different from the conventional coatings illustrated in the prior art wherein, for example, zinc is present in large amounts as a metal and is subject to leaching in order to provide for a higher porosity and increased active surface.

These controlled additions constitute the present invention. In fact, electrocatalytic coatings containing high quantities of metals of the platinum group, or, as a limit case, exclusively consisting of said elements, are readily deactivated when utilized as cathodes in polluted alkali solutions (as regards Ru and Pt refer to D.E. Grove, Platinun Metals Rev. 1985, 29(3), 98-106).

The electrodes of the invention may be used in an electrolytic cell for the electrolysis of alcali metal halides, wherein gas- and liquid-permeable anodes and cathodes are separated by a permeable diaphragm or an ion-exchange membrane, which membrane is substantially impermeable to electrolyte flow, said cell having as the catholyte an alkali metal hydroxide solution, even polluted by iron and/or mercury.

The most meaningful examples are reported in the following part of the description to further illustrate the invention, which however is not intended to be limited thereto. For example, in the following examples the coating is formed by galvanic deposition but it is evident to a person skilled in the art that electroless deposition may be resorted to as well.

### REFERENCE EXAMPLE 1

Various 25 mesh samples made of nickel wire having a diameter of 0.1 mm were steam degreased and rinsed in a 15 % nitric acid solution for about 60 seconds. Utilizing the nickel samples as substrates, electrodeposition was carried out from a plating bath having the following composition :

| | |
|---|---|
| - nickel sulphate | 210 g/l |
| - nickel chloride | 60 g/l |
| - boric acid | 30 g/l |
| - ruthenium oxide po | 4 g/l (as a metal) |
| - additives (types and concentration, see Table I) | |

The bath temperature was about 50°C, and the current density 100 A/square meter. The bath contained ruthenium oxide particles having an average diameter of the particles of about 2 micrometers, with a minimum diameter of 0.5 micrometers and a maximum diameter of 5 micrometers.

The powder was held in suspension by mechanical stirring and electrodeposition was carried out for about 2 hours.

The thickness of the deposited coating was about 25 micrometers and about 10 percent of the coating volume was constituted by ruthenium oxide particles uniformly dispersed in the nickel matrix. Oxide particles only partially covered by nickel, whose surface appeared dendritic, were found onto the surface of the coating.

The potentials of the cathodes thus obtained were then measured as a function of time, at 90°C and at 3 kA/square meter, in alkali solutions of 33 percent NaOH polluted respectively by 50 ppm of iron and 10 ppm of mercury. The detected values were then compared with those characteristic of a cathode prepared from a bath without immunizing additives.

The results, reported in Table 1, outline the substantial effect of catalytic aging caused in particular by mercury onto the un-doped cathode: the catalytic aging is substantially eliminated or remarkably reduced for the cathodes prepared with nickel-plating bath whereto the aforementioned compounds of the doping elements were added.

In this example, as well as in the following examples, the concentrations of the various additives in the plating bath, and of iron and mercury in the 33% NaOH solutions are reported as ppm (parts per million, which correspond more or less to milligrams per liter) of the various additives, expressed as elements. Thus, 100 ppm of TlCl (thallous chloride) are to indicate that the plating bath contains 117 ppm (about 117 milligrams per liter) of salt, corresponding to 100 ppm (about 100 milligrams per liter) of metal.

**TABLE 1**

| Cathode Potentials vs. operating time | | | | | | | | |
|---|---|---|---|---|---|---|---|---|
| Coating | Additive to bath | | | Cathode Potential mV (NHE) | | | Impurity in 33% NaOH | |
| | Element | Salt or Oxide | ppm | Initial | 1 day | 10 days | Element | ppm |
| Ni+RuO₂ | - | - | - | 1050 | 1050 | 1050 | - | - |
| Ni+RuO₂ | - | - | - | 1040 | 1060 | 1070 | Fe | 50 |
| Ni+RuO₂ | - | - | - | 1050 | 1150 | 1750 | Hg | 10 |
| Ni+RuO₂ | Tl | TlCl | 100 | 1050 | 1050 | 1050 | Fe | 50 |
| Ni+RuO₂ | Pb | Pb(NO₃)₂ | 100 | 1050 | 1050 | 1050 | Fe | 50 |
| Ni+RuO₂ | Sn | SnCl₂ | 100 | 1050 | 1050 | 1050 | Fe | 50 |
| Ni+RuO₂ | As | As₂O₃ | 100 | 1050 | 1050 | 1050 | Fe | 50 |
| Ni+RuO₂ | Sb | Sb₂O₃ | 100 | 1050 | 1050 | 1050 | Fe | 50 |
| Ni+RuO₂ | Bi | Bi₂O₃ | 100 | 1050 | 1050 | 1050 | Fe | 50 |
| Ni+RuO₂ | Tl | TlCl₂ | 100 | 1050 | 1050 | 1100 | Hg | 10 |
| Ni+RuO₂ | Pb | Pb(NO₃)₂ | 100 | 1040 | 1040 | 1080 | Hg | 10 |
| Ni+RuO₂ | Sn | SnCl₂ | 100 | 1040 | 1040 | 1090 | Hg | 10 |
| Ni+RuO₂ | As | As₂O₃ | 100 | 1040 | 1050 | 1090 | Hg | 10 |
| Ni+RuO₂ | Sb | Sb₂O₃ | 100 | 1040 | 1060 | 1120 | Hg | 10 |
| Ni+RuO₂ | Bi | Bi₂O₃ | 100 | 1040 | 1070 | 1130 | Hg | 10 |

Tests on the coating were carried out for a limited number of samples (destructive tests such as complete solubilization followed by colorimetric determination or by atomic absorption or non-destructive tests such as X-rays diffraction).

In those cases where the doping effect was due to lead addition, the coating was found to contain 100 to 1000 ppm of this element, depending on the stirring intensity, the other conditions being the same.

Similarly, the coatings doped by tin were found to contain small quantities of this element, in the range of 100 to 300 ppm. Higher contents were detected with a higher deposition temperature, for example 70°C instead of 50°.

### REFERENCE EXAMPLE 2

Nickel fabric samples made with a wire having a diameter of 0.1 mm, after suitable electrolytic pickling, have been activated, as illustrated in Reference Example 1, by an electrocatalytic coating, utilizing a nickel plating Watt bath containing suspended particles of ruthenium oxide and dissolved salts of Pt, Pd, Cu, Ag, Au, as specified in Table 2.

The samples thus prepared were tested as cathodes at 90°C under a current density of 3 kA/square meter, in 334 NaOH solutions either un-poisoned or respectively poisoned by 10 ppm of mercury. The results obtained are listed in the following Table 2.

**TABLE 2**

| Cathode Potentials vs. operating time | | | | | | | | |
|---|---|---|---|---|---|---|---|---|
| Coating | Additive to bath | | | Cathode Potential mV (NHE) | | | Impurity in 33% NaOH | |
| | Element | Salt | ppm | Initial | 1 day | 10 days | Element | ppm |
| Ni+RuO₂ | - | - | - | 1050 | 1050 | 1050 | - | - |
| " | - | - | - | 1050 | 1150 | 1750 | Hg | 10 |
| " | Pt | PtCl₄ | 0.01 | 1040 | 1040 | 1090 | Hg | 10 |
| " | Pd | PdCl₂ | 0.01 | 1050 | 1050 | 1100 | Hg | 10 |
| " | Cu | CuCl₂ | 0.01 | 1050 | 1050 | 1150 | Hg | 10 |
| " | Ag | AgCl(NH₃)₂ | 0.01 | 1040 | 1040 | 1120 | Hg | 10 |
| " | Au | AuCl₃ | 0.01 | 1040 | 1040 | 1180 | Hg | 10 |

### REFERENCE EXAMPLE 3

Some cathodes were prepared following the procedures described in Reference Example 2, with the only difference that mercury an iron salts were added to the nickel-plating baths, instead of the Pt, Pd, Cu, Ag and Au salts.

The cathodes were tested, under the same operating conditions of Example 2, for prolongued times, obtaining the results listed in Table 3, with 33% NaOH solutions poisoned respectively by iron (50 ppm) and mercury (10 ppm).

**TABLE 3**

| Cathode potentials vs. operating time | | | | | | | | |
|---|---|---|---|---|---|---|---|---|
| Coating | Additive to bath | | | Cathode Potential mV (NHE) | | | Impurity in 33% NaOH | |
| | Element | Salt | ppm | Initial | 1 day | 10 days | Element | ppm |
| Ni+RuO₂ | - | - | - | 1050 | 1050 | 1050 | - | - |
| Ni+RuO₂ | - | - | - | 1040 | 1060 | 1070 | Fe | 50 |
| Ni+RuO₂ | - | - | - | 1050 | 1150 | 1750 | Hg | 10 |
| Ni+RuO₂ | Fe | Fe(NO₃)₂ + (NH₄)₂SO₄ weight ratio 1 : 10 | 1 | 1040 | 1060 | 1070 | Fe | 50 |
| Ni+RuO₂ | Fe | " | 10 | 1040 | 1060 | 1060 | Fe | 50 |
| Ni+RuO | Fe | " | 100 | 1040 | 1060 | 1070 | Fe | 50 |
| Ni+RuO₂ | Hg | Hg(NO₃)₂ | 1 | 1050 | 1150 | 1450 | Hg | 10 |
| Ni+RuO₂ | Hg | " | 10 | 1040 | 1070 | 1150 | Hg | 10 |
| Ni+RuO₂ | Hg | " | 100 | 1040 | 1080 | 1250 | Hg | 10 |

### REFERENCE EXAMPLE 4

Nickel fabric samples made of a wire having a diameter of 0.1 mm, after suitable electrolytic pickling, were activated, as illustrated in Reference Example 1, by an electrocatalytic coating utilizing a nickel plating Watt bath containing suspended particles of ruthenium oxide and additives as per Table 4.

Then, the samples were tested as cathodes at 90°C, 3 KA/m2 in 33% NaOH solutions either unpoisoned or poisoned by iron (50 ppm) and mercury (10 ppm) and the relevant cathodic potentials versus time of electrolysis are collected in Table 4.

**TABLE 4**

| Cathode Potentials vs. operating time | | | | | | | | |
|---|---|---|---|---|---|---|---|---|
| Coating | Additive to bath | | | Cathode Potential mV (NHE) | | | Impurity in 33% NaOH | |
| | Element | Salt | ppm | Initial | 30 minutes | 60 minutes | Element | ppm |
| Ni+RuO₂ | - | - | - | 1000 | 1000 | 1000 | - | - |
| Ni+RuO₂ | - | - | - | 1000 | 1080 | 1116 | Fe | 50 |
| Ni+RuO₂ | - | - | - | 1000 | 1800 | - | Hg | 10 |
| Ni+RuO₂ | Cd | CdCl₂ | 100 | 980 | 980 | 980 | - | - |
| NI+RuO₂ | V | VOCl₂ | 1 | 1010 | 1010 | 1010 | - | - |
| Ni+RuO₂ | Mo | Na₂MoO₄ | 10 | 1020 | 1020 | 1020 | - | - |
| Ni+RuO₂ | Cd | CdCl₂ | 1 | 975 | 1320 | - | Hg | 10 |
| Ni+RuO₂ | Cd | CdCl₂ | 10 | 950 | 1270 | 1310 | Hg | 10 |
| Ni+RuO₂ | Cd | CdCl₂ | 100 | 980 | 1080 | 1090 | Hg | 10 |
| Ni+RuO₂ | V | VOCl₂ | 1 | 1010 | 1080 | 1110 | Fe | 50 |
| Ni+RuO₂ | V | VOCl₂ | 1 | 1000 | 1050 | 1105 | Hg | 10 |
| Ni+RuO₂ | v | VOCl₂ | 10 | 1010 | 1000 | 1200 | Hg | 10 |
| Ni+RuO₂ | Mo | Na₂MoO₄ | 10 | 1020 | 1020 | 1060 | Fe | 50 |
| Ni+RuO₂ | No | Na₂MoO₄ | 1 | 1020 | 1100 | 1250 | Hg | 10 |
| Ni+RuO₂ | Mo | Na₂MoO₄ | 5 | 1000 | 1080 | 1230 | Hg | 10 |
| Ni+RuO₂ | Mo | Na₂MoO₄ | 10 | 1010 | 1020 | 1090 | Hg | 10 |
| Ni+RuO₂ | Mo | MoO₃ | 1 | 980 | 1160 | 1190 | Hg | 10 |
| Ni+RuO₂ | Mo | MoO₃ | 5 | 980 | 1130 | 1140 | Hg | 10 |
| Ni+RuO₂ | Mo | MoO₃ | 10 | 945 | 1120 | 1160 | Hg | 10 |

### EXAMPLE 1

Nickel fabric samples made of a wire having a diameter of 0.1 mm, after suitable electrolytic pickling, were activated by an electrocatalytic coating of nickel-ruthenium utilizing a Watt nickel plating bath containing ruthenium trichloride (RuCl₃) in a ratio of 1 g/l as ruthenium, and doping additives, as illustrated in Table 5. The deposition conditions were those described in Reference Example 1.

The samples thus obtained were then utilized as cathodes at 90°C, 3 kA/square meter, in 33% NaOH solutions poisoned by iron (50 ppm) and mercury (10 ppm) respectively.

**TABLE 5**

| Cathode Potentials vs. operating time | | | | | | | | |
|---|---|---|---|---|---|---|---|---|
| Coating | Additive to bath | | | Cathode Potential mV (NHE) | | | Impurity in 33% NaOH | |
| | Element | Salt | ppm | Initial | 1 day | 10 days | Element | ppm |
| Ni-Ru | - | - | - | 1090 | 1090 | 1090 | - | - |
| " | - | - | - | 1090 | 1180 | 1180 | Fe | 50 |
| " | - | - | - | 1100 | 1650 | 2100 | Hg | 10 |
| " | Tl | TlCl | 100 | 1090 | 1110 | 1150 | Fe | 50 |
| " | Pb | Pb(NO₃)₂ | 100 | 1100 | 1100 | 1110 | Fe | 50 |
| " | Sn | SnCl₂ | 100 | 1100 | 1110 | 1130 | Fe | 50 |
| " | As | As₂O₃ | 100 | 1100 | 1110 | 1120 | Fe | 50 |
| " | Sb | Sb₂O₃ | 100 | 1100 | 1110 | 1150 | Fe | 50 |
| " | Bi | Bi₂O₃ | 100 | 1090 | 1090 | 1120 | Fe | 50 |
| " | Tl | TlCl | 100 | 1090 | 1380 | 1750 | Hg | 10 |
| " | Pb | Pb(NO₃)₂ | 100 | 1090 | 1490 | 1750 | Hg | 10 |
| " | Sn | SnCl₂ | 100 | 1100 | 1510 | 1780 | Hg | 10 |
| " | As | As₂O₃ | 100 | 1100 | 1420 | 1820 | Hg | 10 |
| " | Sb | Sb₂O₃ | 100 | 1100 | 1600 | 1980 | Hg | 10 |
| " | Bi | Bi₂O₃ | 100 | 1090 | 1590 | 1870 | Hg | 10 |

### EXAMPLE 2

Nickel-ruthenium coatings were obtained as described in Example 1, the only difference being the nature of the doping additives which were the same utilized in Reference Example 4.

The same results as in Reference Example 4 were obtained.

## Claims

1. A method for galvanically preparing an electrode for electrochemical processes, said electrode being of the type consisting of
a) an electroconductive support and
b) an electrocatalytic coating of nickel, copper, silver or alloys thereof containing metals of the platinum group as a homogeneous phase and at least one doping element selected from cadmium, thallium, lead, tin, arsenic, antimony, bismuth, vanadium or molybdenum; said method consisting in applying said electrocatalytic coating by galvanic deposition on said electroconductive support from a galvanic nickel, copper or silver plating bath containing soluble salts of metals of the platinum group dissolved therein,
characterized in that
the galvanic plating bath further contains, in dissolved or suspended form, 100 to 2000 ppm of at least one compound of said doping elements.

2. The method of claim 1, characterized in that the soluble salt of a metal of platinum group is ruthenium trichloride.

3. An electrode for use in electrochemical processes obtainable according to the method of anyone of the preceding claims.

4. Use of the electrode according to claim 3 as a cathode in an electrolytic cell for the electrolysis of alkali metal halides.

## Patentansprüche

1. Verfahren zur galvanischen Herstellung einer Elektrode für elektrochemische Verfahren, wobei die Elektrode von dem Typ ist, der besteht aus
a) einem elektrisch-leitenden Träger und
b) einem elektrokatalytischen Überzug aus Nickel, Kupfer, Silber oder Legierungen davon, enthaltend Metalle der Platingruppe als homogene Phase und wenigstens ein Dotierungselement, das ausgewählt ist unter Cadmium, Thallium, Blei, Zinn, Arsen, Antimon, Bismut, Vanadium oder Molybdän, wobei das Verfahren darin besteht, daß man den elektrokatalytischen Überzug auf dem elektrisch-leitenden Träger durch galvanische Abscheidung aus einem galvanischen Nickel-, Kupfer- oder Silberplattierbad, das lösliche Salze von Metallen der Platingruppe gelöst enthält, aufbringt,
dadurch gekennzeichnet, daß
das galvanische Plattierbad zusätzlich 100 bis 2000 ppm wenigstens einer Verbindung der Dotierungselemente in gelöster oder suspendierter Form enthält.

2. Verfahren nach Anspruch 1, dadurch gekennzeichnet, daß es sich bei dem löslichen Salz eines Metalls der Platingruppe um Rutheniumtrichlorid handelt.

3. Elektrode zur Anwendung bei elektrochemischen Verfahren, erhältlich nach einem Verfahren gemäß einem der vorhergehenden Ansprüche.

4. Verwendung der Elektrode nach Anspruch 3 als Kathode in einer elektrolytischen Zelle zur Elektrolyse von Alkalimetallhalogeniden.

## Revendications

1. Procédé pour préparer galvaniquement une électrode pour des procédés électrochimiques, ladite électrode étant du type formé:
a) d'un support électroconducteur; et
b) d'un revêtement électrocatalytique de nickel, de cuivre, d'argent ou d'alliages de ceux-ci contenant des métaux du groupe du platine sous forme de phase homogène et au moins un élément dopant choisi parmi le cadmium, le thallium, le plomb, l'étain, l'arsenic, l'antimoine, le bismuth, le vanadium ou le molybdène; ledit procédé consistant à appliquer ledit revêtement électrocatalytique par dépôt galvanique sur ledit support électroconducteur à partir d'un bain de placage galvanique d'argent, de cuivre ou de nickel contenant des sels solubles de métaux du groupe du platine dissous dedans,
caractérisé en ce que
le bain de placage galvanique contient de plus, sous forme dissoute ou en suspension, 100 à 2 000 ppm d'au moins un composé desdits éléments dopants.

2. Procédé selon la revendication 1, caractérisé en ce que le sel soluble d'un métal du groupe du platine est le trichlorure de ruthénium.

3. Electrode pour une utilisation dans des procédés électrochimiques que l'on peut obtenir selon le procédé de l'une quelconque des revendications précédentes,.

4. Utilisation de l'électrode selon la revendication 3 en tant que cathode dans une cellule électrolytique pour l'électrolyse d'halogénures de métal alcalin.
